# EUROPEAN PATENT SPECIFICATION

(11) **EP 1 436 490 B1**
(45) Date of publication and mention of the grant of the patent: **04.08.2010**
(21) Application number: 02768255.8
(22) Date of filing: 11.09.2002
(51) Int. Cl.: F01N 3/035

(54) **HOUSING ARRANGED IN AN EXHAUST GAS SYSTEM FOR A COMBUSTION ENGINE**
IN EINEM ABGASSYSTEM FÜR EINEN VERBRENNUNGSMOTOR ANGEORDNETES GEHÄUSE
ENCEINTE MONTEE DANS LE SYSTEME D'ECHAPPEMENT D'UN MOTEUR A COMBUSTION

(30) Priority: 14.09.2001 SE 0103060
(43) Date of publication of application: 14.07.2004
(73) Proprietor: Scania CV AB (publ), 151 87 Södertälje (SE)
(72) Inventor: GLAV, Ragnar, S-186 50 Vallentuna (SE); LINDEN, Michael, S-152 57 Södertälje (SE)
(86) International application number: PCT/SE2002/001628
(87) International publication number: WO 2003/025356

(56) References cited:
- EP-A1- 0 798 452
- EP-A2- 1 158 144
- EP-A2- 1 256 369
- WO-A1-00/34630
- WO-A1-01/04466
- DE-A- 19 642 946
- DE-A1- 19 955 013
- US-A- 4 857 413

## Description

### BACKGROUND TO THE INVENTION, AND STATE OF THE ART

The invention relates to a converter device intended to be arranged in an exhaust system for a combustion engine according to the preamble of claim 1.

The coming years will see the introduction, in Europe at least, of increasingly restrictive requirements regarding the release of emissions from diesel-powered vehicles, and other types of combustion engines than diesel engines are also being subjected to increasingly severe requirements for effective exhaust cleaning. To be able to meet these emission requirements, exhaust systems of vehicles powered by combustion engines are being equipped with catalysts whose effects include reducing the amount of nitrogen oxides in exhaust gases, and with particle filters which reduce the amount of soot particles in exhaust gases. However, the introduction of exhaust cleaning components such as catalysts and particle filters in the exhaust system results in greater flow resistance to exhaust gases passing through the exhaust system. Greater flow resistance leads to higher fuel consumption by the vehicle.

In addition, exhaust cleaning components such as catalysts and particle filters arranged in an exhaust system have to a great extent the effect of a high-pass filter. This means that low-frequency noise, which is the predominant element in exhaust noise, passes almost undamped through the exhaust cleaning components. It is therefore necessary to add a further noise damping volume to the exhaust system to replace the volume occupied by the particle filter and the catalytic cleaner. Modern exhaust systems which meet increasingly restrictive emission release requirements are therefore occupying an increasing amount of space in vehicles powered by combustion engines.

WO 01/04466 shows a compact converter device for a combustion engine. The converter device comprises an outer canister and a passage for exhaust gases arranged with an annular catalyst and a central particle filter. The exhaust gases flow through the catalyst and the particle filter in parallel but in opposite directions and a plane perpendicular to the flow directions extends through both the catalyst and the particle filter.

EP 1 256 369 A2, which is prior art according to Article 54(3) EPC, discloses a converter device comprising a particle filter and a catalytic cleaner being rolled up as a unit. The filter and the catalytic device incorporate planar and corrugated strip-shaped material portions.

### SUMMARY OF THE INVENTION

The object of the present invention is to provide a converter device which incorporates a particle filter and a catalytic cleaner and occupies a substantially minimum space in an exhaust system, while at the same time providing a passage with low flow resistance to exhaust gases and a high exhaust cleaning effect.

The objects stated above are achieved with the converter device mentioned in the introduction which is characterised by what is indicated in the characterising part of claim 1. As at least one plane perpendicular to said parallel flows in opposite directions extends through both the particle filter and the catalytic cleaner, the exhaust cleaning components are thus arranged at least partly alongside one another and not in the otherwise usual pattern of being in line after one another. The exhaust gases are led through the converter device via the passage in a first direction through the one exhaust cleaning component before the passage changes direction so that the exhaust gases are led in an opposite second direction through the other exhaust cleaning component. The inlet and the outlet for the exhaust gases are thus on the same side of the converter device. Such positioning of the exhaust cleaning components means that the converter device can have a relatively short and compact external shape. The converter device thus occupies little space.

According to a preferred embodiment of the invention, the exhaust cleaning components exhibit a constant cross-sectional shape in the exhaust gas flow direction. Such a design allows a substantially rectilinear flow of exhaust gases through the exhaust cleaning components. With advantage, the particle filter and the catalytic cleaner are so positioned relative to one another in the casing that one of said exhaust cleaning components surrounds the other component in said plane. The capacity of the particle filter and the catalytic cleaner is related to their volumes. Positioning the exhaust cleaning components so that one component surrounds the other component results in a very short and compact design. The casing which encloses the exhaust cleaning components may therefore have a correspondingly short and compact shape. With advantage, the inside of said components exhibits a circular shape in said plane and the outer component extends in an annular manner round the inner component. The result is a substantially optimum compact design with respect to the capacity of the exhaust cleaning components, and the casing may have a correspondingly optimum compact shape.

According to another preferred embodiment of the present invention, the particle filter is the outer component and the catalytic cleaner the inner component. Such positioning has several advantages, e.g. it makes it relatively easy to fit the constituent items inside the casing, it facilitates the design of an exhaust gas path which allows effective noise damping, and it facilitates the arrangement of any possible burner intended, when necessary, to raise the temperature of the exhaust gases before they reach the particle filter. Such raising of the exhaust gas temperature is in many cases necessary to ensure that soot particles ignite and burn in the particle filter. Alternatively, however, the catalytic cleaner may be the outer component and the particle filter the inner component. With advantage, the particle filter has a larger cross-sectional area than the catalytic cleaner in said plane. The result is a still slower flow velocity of exhaust gases through the particle filter than through the catalytic cleaner. The flow resistance is normally greater through the particle filter than through the catalytic cleaner because the particle filter incorporates stop surfaces which force the gases through the duct walls. As the flow resistance is related to the flow velocity, the lower flow velocity through the particle filter leads to reduced flow resistance to the exhaust gases through the particle filter. The total flow resistance to the exhaust gases through the converter device may thus also be reduced. The cross-sectional area of the particle filter is preferably at least 1.5 times that of the catalytic cleaner in said plane. Advantageously, the cross-sectional area of the particle filter is about twice that of the catalytic cleaner in said plane.

According to the present invention, the catalytic cleaner incorporates a strip-shaped first material portion incorporating planar surfaces which is rolled up together with a second strip-shaped material portion incorporating corrugated surfaces, thus forming a catalytic cleaner which comprises elongate ducts formed between the planar surfaces of the first material portion and the corrugated surfaces of the second material portion. Such a catalyst is relatively easy and inexpensive to manufacture. With advantage, the particle filter incorporates a fourth strip-shaped elongate material portions incorporating planar surfaces which is rolled up together with a fifth material portion incorporating corrugated surfaces which is provided with stop surfaces, thus forming a particle filter which comprises elongate ducts formed between the planar surfaces of the fourth material portion and the corrugated surfaces of the fifth material portion so that each of the elongate ducts incorporates at least one stop surface. Such a particle filter is likewise relatively easy and inexpensive to manufacture. Said stop surfaces may be obtained by arranging beads of a pasty material across the corrugations of the fourth material portion at appropriate points. When the fourth and fifth material portions are rolled up together, the pasty material is intended to become solidified so as to form said stop surfaces in the elongate ducts.

According to the present invention, the particle filter and the catalytic cleaner form a combined unit A combined particle filter and catalytic cleaner can therefore easily be fitted in and removed from the converter device. At least the particle filter needs to be detached for cleaning and turning over at regular intervals. A combined unit incorporating rolled-up particle filter and catalytic cleaner as above may entail the original strip-shaped portions of the particle filter and catalytic cleaner being bonded and a combined unit being formed by the bonded strip-shaped portions being rolled up together to form a unit. With advantage, the first material portion of the catalytic cleaner and the fourth material portion of the particle filter are bonded by means of a third material portion which in a rolled-up state forms a tight radial seal between the particle filter and the catalytic cleaner.

### BRIEF DESCRIPTION OF THE DRAWINGS

Preferred embodiments of the invention are described below by way of examples with reference to the attached drawings, in which:
- Fig. 1: depicts a converter device according to an embodiment of the present invention,
- Fig. 2: depicts a sectional view along the line A-A in Fig. 1,
- Fig. 3: depicts an inlet to a converter device according to the present invention,
- Fig. 4: depicts a combined unit incorporating a particle filter and a catalytic cleaner at a first stage of manufacture, and
- Fig. 5: depicts the combined unit at a later stage of manufacture.

### DETAILED DESCRIPTION OF PREFERRED EMBODIMENTS OF THE INVENTION

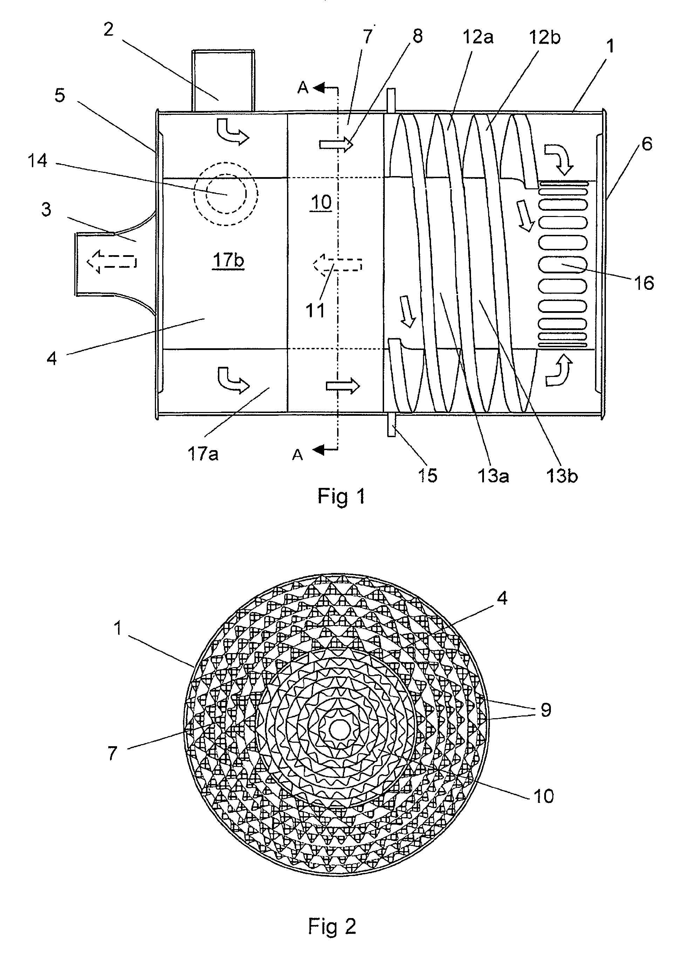

Fig. 1 depicts a converter device intended to be arranged in an exhaust system for a diesel-powered vehicle. The converter device incorporates an external casing I which has a substantially cylindrical shape. In Fig. 1, the portion of the casing 1 which faces the observer has been removed to show the items arranged inside the casing 1. The casing I forms a closed external surface except at the points where an inlet 2 and an outlet 3 are arranged for exhaust gases. A pipe 4 of circular cross-section which has a smaller diameter than the diameter of the casing 1 is arranged inside the casing 1 so that a central axis in an axial direction through the casing 1 and the pipe 4 coincide. The pipe 4 has a length corresponding to the casing 1 and the ends of the pipe 4 abut against first and second endwalls 5 and 6 respectively of the casing 1.

The converter device incorporates exhaust cleaning components to clean exhaust gases which flow through a passage which extends between the inlet 2 and the outlet 3. A first exhaust cleaning component in the form of a particle filter 7 is arranged externally about the pipe 4. Fig. 2 depicts a sectional view along the line A-A in Fig. 1. In the plane A illustrated in Fig. 2, the particle filter 7 is shown stretching annularly round the pipe 4. The particle filter 7 has a radial extent such that it entirely fills the radial space between the pipe 4 and the casing 1. The particle filter 7 incorporates elongate ducts which have an extent in a first direction 8. The elongate ducts are intended to lead the exhaust gases through the filter 7. The particle filter has a constant cross-sectional shape in the direction of flow of the exhaust gases, which are therefore led substantially in the first direction 8 through the particle filter 7. The particle filter 7 incorporates stop surfaces 9 arranged at appropriate points along the extent of the elongate ducts. The stop surfaces 9 cause the exhaust gases to be led into adjacent elongate channels in the particle filter. Soot particles are thereby caught and burnt in the particle filter 7. A second exhaust cleaning component in the form of a catalytic cleaner 10 is arranged inside the pipe 4. The catalytic cleaner 10 is arranged radially within the particle filter 7 in the plane A depicted in Fig. 2. The catalytic cleaner 10 also incorporates elongate ducts designed to lead the exhaust gases in a substantially second direction 11 through the catalytic cleaner 10. The catalytic cleaner 10 has a constant cross-sectional shape in the exhaust gas flow direction 11. The catalytic cleaner 10 is intended to effect catalytic cleaning of the exhaust gases, particularly in order to reduce the nitrogen oxides content of the exhaust gases passing through.

A basic principle for damping low-frequency noise is to create a long exhaust route between two spaces. An effective low-frequency noise damper in which such an exhaust route is straight occupies a great deal of space. Low-frequency noise is the predominant portion of the noise from a combustion engine. The converter device incorporates noise damping means designed according to this basic principle. The converter device thus incorporates two elongate profiled sections 12a, b which extend helically round the pipe 4. The sections 12a, b have a radial extent such that they fill the radial space between the pipe 4 and the casing 1. In this case, each of the sections 12a, b extends for about 600° round the pipe 4. The two sections 12a, b form between them two helical parallel flow paths 13a, b whose inlet and outlet are offset 180° from one another. The flow paths 13a, b thus extend likewise helically round the pipe 4 in the radial space enclosed by the casing 1 and the pipe 4. The exhaust gases led through said helical flow paths 13a, b travel a considerably longer distance than the length of a straight line between the inlet and outlet of the flow paths 13a, b. The space in the passage upstream from the helical flow paths 13a, b forms a first space, and the space downstream from said flow paths to the catalytic cleaner 10 forms a second space. Leading the exhaust gases via said helical flow paths 13a, b creates a long exhaust route which does not need an elongate converter device in order to allow effective noise damping. The converter device which thus contains both exhaust cleaning components and noise damping components can therefore be made very compact and require little space.

A burner 14 is arranged in the vicinity of the inlet 2 in the converter device. The purpose of the burner 14 is, when necessary, to heat the exhaust gases to a temperature such that soot particles can be burnt in the particle filter 7. Soot particles normally ignite at a temperature of about 600°C but in most cases it is difficult to guarantee such a high exhaust temperature even with a high-performance burner 14. The ignition temperature of soot particles has therefore usually to be lowered. This may be achieved by converting the various types of nitrogen oxides NOₓ arising to nitrogen dioxide NO₂. There are basically two methods for doing so. According to a first method, CRT (Continuous Regeneration Trap), a separate oxidising catalytic cleaner is arranged for the purpose before the particle filter 7 in the exhaust gas flow direction (see Fig. 6). In this situation, soot particles ignite at about 225°C in the particle filter 7. According to a second method, CSF (Catalytic Soot Filter), the particle filter 7 is lined with a suitable lining material so that the oxidising catalysis from NOₓ to NO₂ takes place directly on the surface of the particle filter 7. In this situation, soot particles ignite at about 250°C. It is also possible by means of various additives in the fuel to obtain a lowered ignition temperature of about 350°C in a conventional particle filter 7.

In cases where a catalytic cleaner 10 which works by SCR (Selective Catalytic Reduction) is used, injection devices 15 are arranged at the periphery of the converter 1 to add an ammonia carrier substance, e.g. in the form of urea. When the ammonia carrier has been added, it has to be properly mixed in to optimise the performance of the catalytic cleaner 10 in reducing to nitrogen gas and water the ammonia and nitrogen oxide content of the exhaust gases passing through. With the elongate flow paths 13a, b, this is no problem.

The pipe 4 incorporates at the end which abuts against the second endwall 6 a multiplicity of holes 16 which are elliptical in shape. The holes 16 are arranged at substantially constant spacings round the periphery of the pipe 4. The holes 16 are well-proportioned in both number and size. The holes 16 therefore allow the exhaust gases to flow into the pipe 4 with relatively low flow losses. The holes allow flow in the passage from a first part-route 17a arranged externally about the tube 4 to a second part-route 17b arranged inside the pipe 4.

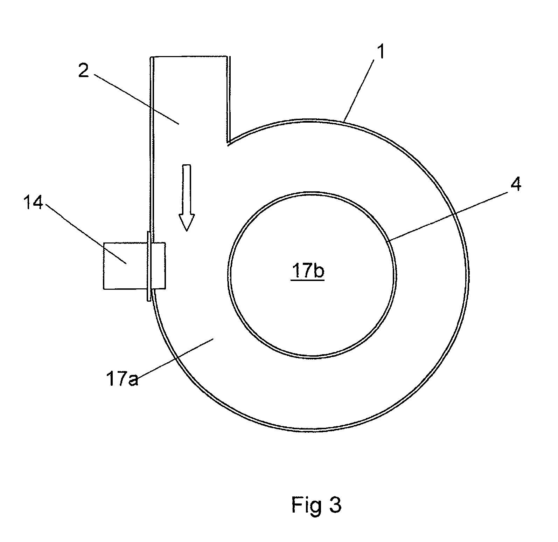

The exhaust gases are led into the converter device via the inlet 2. Fig. 3 depicts a sectional view through the converter device at the inlet 2. The exhaust gases are led from the inlet 2 into a substantially annular space of the first part-route 17a, which annular space extends round the pipe 4 in the vicinity of the first endwall 5 of the casing 1. The annular space of the first part-route 17a affords relatively little flow resistance to the exhaust gases flowing in and imparts to the exhaust gases a substantially even distribution before they are led on in an axial direction relative to the pipe 4 and into the particle filter 7. The exhaust gases flowing in are heated as necessary by the burner 14 to a temperature such as to guarantee ignition and combustion of soot particles in the exhaust gases in the particle filter 7. The exhaust gases are led in the first direction 8 through the elongate ducts of the particle filter 7. Stop surfaces 9 are thus arranged at suitable points along the elongate ducts and force the exhaust gases into adjacent elongate ducts in the particle filter 7. Depending on the regenerating system and the temperature, the soot particles caught at this stage in the particle filter 7 ignite and burn. The exhaust gases are thus forced to deviate a shorter distance sideways but they mainly flow in the first direction 8 along a substantially straight line through the particle filter 7. The exhaust gases flowing out of the filter 7 have in principle been cleared of soot particles.

Injection devices 15 are used to add a substance in the form of an ammonia carrier to the exhaust gases flowing from the particle filter 7 before these exhaust gases are led on into one of the two parallel flow paths 13a, b formed by the helical sections 12a, b which extend round the pipe 4. The two flow paths 13a, b are offset 180° from one another so as to obtain a substantially even distribution of exhaust gases between the two flow paths 13a, b. The sections 12a, b have a radial extent such that they fill the space between the pipe 4 and the casing 1. The exhaust gases led through the helical flow paths 13a, b travel a considerably longer distance than the length of a straight line between the inlet and outlet of the flow paths 13a, b. The result is an elongate exhaust route connecting two spaces of the passage so as to obtain effective noise damping of low-frequency noise from the diesel engine. The elongate flow paths 13a, b also provide a necessary mixing distance for the ammonia carrier so that the latter becomes distributed substantially uniformly in the exhaust gases. The exhaust gases are subject to relatively slight changes of direction as they pass through the helical flow paths 13a, b, thereby causing little flow resistance to the exhaust gases. The exhaust gases flowing out from the helical paths are led radially inwards and into the pipe 4 via the holes 16. The holes 16 define a transition between the passage's first part-route 17a externally about the pipe 4 and the passage's second part-route inside the pipe 4. The passage through the holes 16 changes the direction of flow of the exhaust gases and leads them towards the catalytic cleaner 10. When the exhaust gases flowing inside the pipe 4 reach the catalytic cleaner 10, they flow into the latter's elongate ducts. The elongate ducts allow the exhaust gases to flow in the second flow direction 11 which is parallel with, but in the opposite direction to, the first flow direction 8. In the catalytic cleaner 10, the nitrogen oxides and ammonia content of the exhaust gases is reduced to nitrogen gas and water. Thereafter the exhaust gases substantially cleared of soot particles and nitrogen oxides flow out through the outlet 3. The outlet 3 incorporates a well-rounded tapering shape which connects the pipe 4 to a narrower pipe of the exhaust system. The narrower pipe is not depicted in the drawings. The shape of the outlet 3 means that the exhaust gases are here again subject to very little flow resistance.

The particle filter 7 has a larger cross-sectional area than the catalytic cleaner 10 in the plane A depicted in Fig. 2. This means that the exhaust gases pass through the particle filter 7 at a lower velocity than through the catalytic cleaner 10. The flow resistance to the exhaust gases is related to the flow velocity. Owing to the stop surfaces 9, the flow resistance to the exhaust gases is normally greater in the particle filter 7 than in the catalytic cleaner 10. The total flow resistance through the passage can be considerably reduced by lowering the flow velocity through the particle filter 7. Advantageously, the cross-sectional area of the particle filter 7 is about twice that of the catalytic cleaner 10.

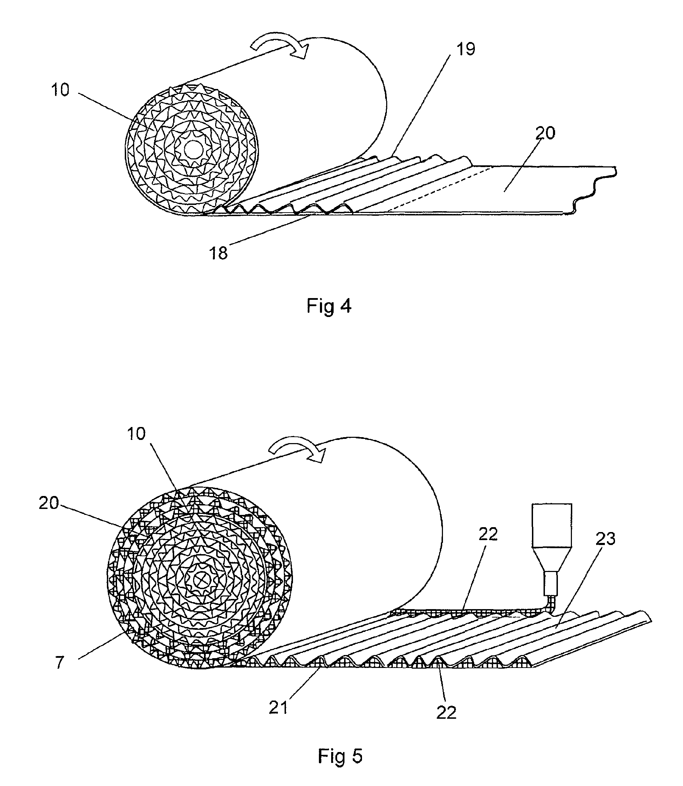

According to the present invention, the particle filter 7 and the catalytic cleaner 10 are so positioned relative to one another in the casing 1 that at least one plane A, perpendicular to said parallel first and second directions 8 and 11 respectively, extends through both the particle filter 7 and the catalytic cleaner 10. Such close mutual positioning of the particle filter 7 and the catalytic cleaner 10 means that according to one alternative of the present invention they can be manufactured so as to form a combined unit. Figs. 4 and 5 depict a combined unit incorporating a particle filter 7 and a catalytic cleaner 10 at first and second stages of manufacture. The catalyst 10 comprises a first elongate strip-shaped material portion 18 incorporating planar surfaces and a second material portion 19 incorporating corrugated surfaces. The second material portion 19 is arranged on top of the first material portion 18, followed by the first and second material portions 18 and 19 respectively being rolled up together in the direction of the arrow. In this case the first material portion 18 is bonded to a third material portion 20 which is intended to form an outer radial seal between the particle filter 7 arranged radially externally and the catalytic cleaner 10. The third material portion 20 may alternatively incorporate the first material portion 18, in which case the latter is made longer than the second material portion 19. Fig. 5 shows a later stage in the manufacturing process. Here a fourth elongate strip-shaped material portion 21 is bonded to the third material portion 20. A bead of pasty material 22 is thereafter arranged on the fourth material portion 21. A fifth corrugated material portion 23 is then arranged over the fourth material portion 21 and the bead of pasty material 22. At this stage the pasty material 22 adapts its shape to the hollow shape between the fourth and fifth material portions 21 and 23 respectively. A second bead of pasty material 22 is arranged on top of the corrugated fifth material portion 23. Thereafter the cylindrically rolled body is rolled further in the direction of the arrow so that the fourth and fifth material portions 21 and 23 respectively are rolled up and grip radially the outside of the catalytic cleaner 10. The beads of pasty material 22 become solidified and form stop surfaces 9 in the elongate ducts formed between the planar surfaces of the fourth material portion 21 and the corrugated surfaces of the fifth material portion 23. Finally, a fastening element is preferably arranged at a suitable position to prevent rolling up of the constituent material portions. The third material portion 20 intended to form a tight radial seal between the particle filter 7 and the catalytic cleaner 10 may be made broad enough to form the centrally situated pipe 4 in the converter 1. Alternatively the third material portion 20 may be suitably bonded to coaxially arranged portions of the pipe 4.

The invention is in no way limited to the embodiments described but may be varied freely within the scopes of the claims. For example, the converter device need not have the exhaust gases flowing through it in the direction described. The exhaust gases may alternatively be led first into the pipe 4 via an inlet before being led radially outwards and in an opposite direction on the outside of the pipe 4 to an outlet. In such a case the particle filter 7 is arranged inside the pipe 4, and the catalytic cleaner 10 outside the pipe 4. The casing 1, the exhaust gas cleaning components 7, 10, 25 and the pipe 4 need not necessarily have a circular external shape in said plane A but may be of substantially any functional shape. Likewise, the pipe 4 need not be arranged centrally within the casing 1 but may have substantially any functional positioning.

## Claims

1. A converter device intended to be arranged in an exhaust system for a combustion engine, which converter device comprises an outer casing (1), a passage for leading exhaust gases through the converter device, a catalytic cleaner (10) arranged in said passage to effect catalytic cleaning of the exhaust gases, wherein the catalytic cleaner (10) incorporates a strip-shaped elongate first material portion (18) which incorporates planar surfaces, which first material portion (18) is rolled up together with a strip-shaped second material portion (19) which incorporates corrugated surfaces, and a particle filter (7) arranged in said passage to remove particles from the exhaust gases, wherein particle filter (7) incorporates a strip-shaped elongate fourth material portion (21) which incorporates planar surfaces, which fourth material portion (21) is rolled up together with a strip-shapad fifth material portion (23) which incorporates corrugated surfaces, which fifth material portion (23) is provided with stop surfaces (22), and wherein the particle filter (7) and the catalytic cleaner (10) are so positioned relative to one another that the exhaust gases flow through the particle filter (7) and the catalytic cleaner (10) in substantial parallel but opposite directions (8, 11) and that at least one plane (A) perpendicular to said parallel directions (8, 11) extends though both the particle filter (7) and the catalytic cleaner (10), whereby the strip shaped portions (18, 19, 21, 23) are being rolled up together to form a unit so that the particle filter and the catalytic cleaner (7, 10) are so positioned relative to one another that one of said exhaust cleaning components surrounds the other component in said plane (A), and in that the material portions (18, 19, 21, 23) of the particle filter (7) and catalytic cleaner (10) incorporate a bonding (20) and that said bonding incorporates a third material portion (20) which bonds together the first material portion (18) of the catalytic cleaner and the fourth material portion (21) of the particle filter, which third material portion (20) is intended to form a tight radial seal between the particle filter (7) and the catalytic cleaner (10) in said rolled-up state.

2. A converter device according to claim 1, **characterised in that** the exhaust cleaning components (7, 10) exhibit a constant cross-sectional shape in the exhaust gas flow direction (8, 11).

3. A converter device according to claim 1, **characterised in that** the inner of said components (7, 10) has a circular shape in said plane (A) and that the outer component (7, 10) extends annularly round the inner component (7, 10) in said plane (A).

4. A converter device according to claim 1 or 3, **characterised in that** the particle filter (7) is the outer component and that the catalytic cleaner (10) is the inner component.

5. A converter device according to claim 1 or 3, **characterised in that** the catalytic cleaner (10) is the outer component and that the particle filter (7) is the inner component.

6. A converter device according to any one of the foregoing claims, **characterised in that** the particle filter (7) has a larger cross-sectional area than the catalytic cleaner (10) in said plane (A).

## Patentansprüche

1. Wandlervorrichtung, die dazu vorgesehen ist, in einem Abgassystem für eine Verbrennungsmaschine angeordnet zu werden, wobei die Wandlervorrichtung umfast: ein äußeres Gehäuse (1), einen Kanal zum Führen von Abgasen durch die Wandlervorrichtung, einen katalytischen Reiniger (10), der in dem Kanal angeordnet ist, um die katalytische Reinigung der Abgase durchzuführen, wobei der katalytische Reiniger (10) einen streifenförmigen länglichen ersten Materialbereich (18) umfasst, welcher ebene Flächen aufweist, wobei der erste Materialbereich (18) mit einem streifenförmigen zweiten Materialbereich (19) aufgerollt ist, welcher wellenförmige Flächen aufweist, und einen Partikelfilter (7), der in dem Kanal angeordnet ist, um Partikel aus den Abgasen zu entfernen, wobei der Partikelfilter (7) einen streifenförmigen länglichen vierten Materialbereich (21) umfasst, welcher ebene Flächen aufweist, wobei der vierte Materialbereich (21) mit einem streifenförmigen fünften Materialbereich (23) aufgerollt ist, welcher wellenförmige Flächen aufweist, wobei der fünfte Materialbereich (23) mit Haltflächen (22) versehen ist, und wobei der Partikelfilter (7) und der katalytische Reiniger (10) derart relativ zueinander positioniert sind, dass die Abgase durch den Partikelfilter (7) und den katalytischen Reiniger (10) im Wesentlichen parallel aber in entgegengesetzten Richtungen (8, 11) strömen, und dass mindestens eine Ebene (A), die rechtwinklig zu den parallelen Richtungen (8, 11) verläuft, sich sowohl durch den Partikelfilter (7) als auch durch den katalytischen Reiniger (10) erstreckt, wobei die streifenförmigen Bereiche (18, 19, 21, 23) zusammen aufgerollt sind, um eine Einheit zu bilden, so dass der Partikelfilter und der katalytische Reiniger (7, 10) derart relativ zueinander positioniert sind, dass eine der Abgasreinigungskomponenten die andere Komponente in der Ebene (A) umgibt, und dass die Materialbereiche (18, 19, 21, 23) des Partikelfilters (7) und des katalytischen Reinigers (10) eine Verbindung (20) enthalten, und dass die Verbindung einen dritten Materialbereich (20) bildet, welcher den ersten Materialbereich (18) des katalytischen Reinigers und den vierten Materialbereich (21) des Partikelfilters miteinander verbindet, wobei der dritte Materialbereich (20) dazu vorgesehen ist, zwischen dem Partikelfilter (7) und dem katalytischen Reiniger (10) eine eng anliegende radiale Dichtung in dem aufgerollten Zustand zu bilden.

2. Wandlervorrichtung nach Anspruch 1, **dadurch gekennzeichnet, dass** die Abgasreinigungskomponenten (7, 10) eine konstante Querschnittsform in der Abgasströmungsrichtung (8, 11) aufweisen.

3. Wandlervorrichtung nach Anspruch 1, **dadurch gekennzeichnet, dass** die innere der Komponenten (7, 10) in der Ebene (A) eine ringförmige Form aufweist, und dass die äußere Komponente (7, 10) sich in der Ebene (A) ringförmig um die innere Komponente (7, 10) erstreckt.

4. Wandlervorrichtung nach Anspruch 1 oder 3, **dadurch gekennzeichnet, dass** der Partikelfilter (7) die äußere Komponente ist und dass der katalytische Reiniger (10) die innere Komponente ist.

5. Wandlervorrichtung nach Anspruch 1 oder 3, **dadurch gekennzeichnet, dass** der katalytische Reiniger (10) die äußere Komponente und dass der Partikelfilter (7) die innere Komponente ist.

6. Wandlervorrichtung nach einem der vorhergehenden Ansprüche, **dadurch gekennzeichnet, dass** der Partikelfilter (7) eine größere Querschnittsfläche als der katalytische Reiniger (10) in der Ebene (A) aufweist.

## Revendications

1. Dispositif convertisseur destiné à être disposé dans un système d'échappement d'un moteur à combustion, lequel dispositif convertisseur comprend un carter externe (1), un passage pour mener les gaz d'échappement à travers le dispositif convertisseur, un épurateur catalytique (10) disposé dans ledit passage pour effectuer une épuration catalytique des gaz d'échappement, l'épurateur catalytique (10) comprenant une première partie de matériau allongée en forme de bande (18) qui comprend des surfaces planes, laquelle première partie de matériau (18) est enroulée avec une deuxième partie de matériau en forme de bande (19), qui comprend des surfaces ondulées, et un filtre à particules (7) disposé dans ledit passage pour retirer des particules des gaz d'échappement, le filtre à particules (7) comprenant une quatrième partie de matériau allongée en forme de bande (21), qui comprend des surfaces planes, laquelle quatrième partie de matériau (21) est enroulée avec une cinquième partie de matériau en forme de bande (23), qui comprend des surfaces ondulées, laquelle cinquième partie de matériau (23) est pourvue de surfaces de butée (22), le filtre à particule (7) et l'épurateur catalytique (10) étant positionnés l'un par rapport à l'autre de manière telle que les gaz d'échappement s'échappent à travers le filtre à particules (7) et l'épurateur catalytique (10) dans des directions essentiellement parallèles mais de sens opposé (8, 11) et qu'au moins un plan (A) perpendiculaire auxdites directions parallèles (8, 11) s'étende à travers le filtre à particules (7) et l'épurateur catalytique (10), moyennant quoi les parties en forme de bande (18, 19, 21, 23) sont enroulées ensembles de façon à former une unité, de telle sorte que le filtre à particules et l'épurateur catalytique (7, 10) soient positionnés l'un par rapport à l'autre de manière telle que l'un desdits composants d'épuration de l'échappement entoure l'autre composant dans ledit plan (A), et en ce que les parties de matériau (18, 19, 21, 23) du filtre à particules (7) et de l'épurateur catalytique (10) comprennent une liaison (20), et en ce que ladite liaison comprend une troisième partie de matériau (20) qui lie ensemble la première partie de matériau (18) de l'épurateur catalytique et la quatrième partie de matériau (21) du filtre à particules, laquelle troisième partie de matériau (20) est destinée à former un joint radial étanche entre le filtre à particules (7) et l'épurateur catalytique (10) dans ledit état enroulé.

2. Dispositif convertisseur selon la revendication 1, **caractérisé en ce que** les composants d'épuration de l'échappement (7, 10) présentent une forme constante en coupe transversale dans la direction d'écoulement (8, 11) des gaz d'échappement.

3. Dispositif convertisseur selon la revendication 1, **caractérisé en ce que** celui desdits composants (7, 10) qui est à l'intérieur a une forme circulaire dans ledit plan (A) et **en ce que** le composant externe (7, 10) s'étend de manière annulaire autour du composant interne (7, 10) dans ledit plan (A).

4. Dispositif convertisseur selon la revendication 1 ou 3, **caractérisé en ce que** le filtre à particules (7) est le composant externe et l'épurateur catalytique (10) est le composant interne.

5. Dispositif convertisseur selon la revendication 1 ou 3, **caractérisé en ce que** l'épurateur catalytique (10) est le composant externe et le filtre à particules (7) est le composant interne.

6. Dispositif convertisseur selon l'une quelconque des revendications précédentes, **caractérisé en ce que** le filtre à particules (7) a une aire en section transversale plus grande que celle de l'épurateur catalytique (10) dans ledit plan (A).
